**Europäisches Patentamt**

**European Patent Office**

**Office européen des brevets**

(11) Veröffentlichungsnummer: **0 450 419 A1**

## EUROPÄISCHE PATENTANMELDUNG

(21) Anmeldenummer: **91104482.4**

(22) Anmeldetag: **22.03.91**

(51) Int. Cl.5: **F16J 15/12, F02F 11/00**

(30) Priorität: **05.04.90 DE 4010991**

(43) Veröffentlichungstag der Anmeldung:
**09.10.91 Patentblatt 91/41**

(84) Benannte Vertragsstaaten:
**DE FR GB IT**

(71) Anmelder: **GOETZE AG**
**Bürgermeister-Schmidt-Strasse 17**
**W-5093 Burscheid 1(DE)**

(72) Erfinder: **Klein, Bernhard, Dipl.-Ing.**
**Rosenweg 8**
**W-5068 Odenthal-Blecher(DE)**

(54) **Metallische Flachdichtung, insbesondere Zylinderkopfdichtung.**

(57) Bei einer Flachdichtung aus einer Metallblechplatte (2), wie insbesondere einer Zylinderkopfdichtung für Verbrennungskraftmaschinen, sind die vor allem in die Flüssigkeitsöffnungen (5,6,7) eingesetzten Einsatzdichtungsringe (8,9) aus Weichstoffmaterial mit zur Verstärkung eingelagerten Metallblechringen (17) durch von den Verstärkungsringen (17) am Außenumfang ausgehende Vorsprünge (10), die in entsprechende eingeprägte Vertiefungen (18) der Öffnungsrandbereiche der Dichtungsplatte (2) eingesetzt sind, durch Verstemmen der Vertiefungen (18) befestigt.

FIG. 1

EP 0 450 419 A1

Die Erfindung betrifft eine Flachdichtung aus einer Metallblechplatte, wie insbesondere eine Zylinderkopfdichtung für Verbrennungskraftmaschinen, mit in mindestens eine der Durchgangsöffnungen eingesetztem Dichtungsring aus metallisch verstärktem Weichstoffmaterial und am Außenumfang radial vorstehenden Vorsprüngen.

Zur besseren Abdichtung werden vor allem bei metallischen Zylinderkopfdichtungen in die Flüssigkeitsöffnungen Weichstoffringe eingesetzt. Die Dichtungsringe bestehen aus Elastomeren oder anderen Weichstoffmaterialien, und sie besitzen zur Erhöhung ihrer Festigkeitswerte meistens eingelagerte und/oder einvulkanisierte metallische Verstärkungsringe. Die metallischen Verstärkungsringe können dabei auch die Funktion von Trägerringen besitzen, auf denen beidseitig ringförmiges, die Öffnungen umgebendes Weichstoffmaterial aufgetragen ist. Die bevorzugt profilierten Einsatz-Dichtungsringe verformen sich beim Einbau unter dem Dichtpressungsdruck elastisch und dichten aufgrund ihrer elastischen Rückverformungskraft am Öffnungsrand ab.

Funktionswichtig für die Handhabung und den Betrieb ist eine sichere Befestigung der Einsatzdichtungsringe an den Öffnungsrändern der Dichtung. Das zur Befestigung meist verwendete Einkleben der Einsatzdichtungsringe in die Durchgangsöffnungen erfolgt aufwendig in Handarbeit, und vor allem steht zum Ankleben der Dichtungsringe die nur kleine Öffnungsschnittfläche der nur wenige Millimeter dicken Dichtungsplatte zur Verfügung. Das Einkleben der Einsatzdichtungsringe ist daher unwirtschaftlich, und vor allem kann die nur schwache Klebverbindung schnell schadhaft werden, die Einsatzdichtungsringe können leicht aus dem Öffnungen herausgedrückt werden, und im Betrieb kann die gesamte Dichtung durch Leckage ausfallen.

Vor allem in der Massenproduktion von Zylinderkopfdichtungen werden in Formwerkzeugen an die Öffnungsränder Elastomermassen aufgespritzt, die dann in der Form unter gleichzeitiger Ausbildung haftfester Verbindungen zu Einsatzdichtungsringen ausvulkanisiert werden. Aufwendig sind bei diesem Verfahren die für jeden Dichtungstyp erforderlichen teuren Einzelwerkzeuge, so daß dieses Verfahren nur bei Massenfertigungen wirtschaftlich verwendet werden kann. Vor allem aber sind Zylinderkopfdichtungen für Großmotoren mit mehreren, in Reihe nebeneinander angeordneten Zylindern relativ lang und können nicht mehr problemlos auf herkömmlichen Spritzmaschinen gehandhabt werden.

Man hat schon mit weiteren Konstruktionen Versuche zur funktionssicheren Befestigung der Einsatzdichtungsringe an den Öffnungsrändern von Flachdichtungen durchgeführt. Diese Konstruktionen haben sich jedoch nicht durchgesetzt, vor allem weil sie unwirtschaftlich sind, weil die Befestigungen nicht funktionssicher genug sind oder weil sie das Abdichtungsverhalten sogar ungünstig beeinflussen.

Nach beispielsweise dem DE-GM 81 02 660 besitzen die in die Elastomerringe einvulkanisierten metallischen Verstärkungsringe am Außenumfang radial vorstehende Vorsprünge, die wechselseitig aufgebogen sind und zur Befestigung einfassungsschenkelartig am Öffnungsrand der Dichtungsplatte zur Befestigung aufliegen.

Nach der US-PS 3.874.675 bestehen die Einsatzdichtungsringe aus metallischen Trägerringen und ringförmigen elastomeren Auflagen. Die Trägerringe besitzen am Außenumfang radial vorstehende Vorsprünge, die in entsprechenden Ausnehmungen der Dichtung am Öffnungsrand beim Einsetzen der Einsatzdichtungsringe passend einliegen. Die Vorsprünge sind gesickt, so daß beim Flachdrücken der Sicken bei der Montage die Vorsprünge sich ausdehnen und dadurch in den Ausnehmungen verspannen. Diese Einsatzdichtungsringe sind nur aufwendig herstellbar, und vor allem sind die Verformungen der Sicken beim Flachdrücken nur schwer kontrollierbar, so daß die auftretenden Spannungen die Einsatzdichtungsringe selbst deformieren und Funktionsstörungen mit Leckage der Flachdichtung auftreten können.

Der vorliegenden Erfindung liegt daher die Aufgabe zugrunde, eine Flachdichtung gemäß Oberbegriff des Hauptpatentanspruches zu schaffen, deren Einsatzdichtungsringe funktionssicher mit einfachen und wirtschaftlichen Methoden in den Durchgangsöffnungen befestigt sind.

Erfindungsgemäß wird diese Aufgabe durch eine Flachdichtung gelöst, deren Einsatzdichtungsringe am Außenumfang von den Verstärkungsringen gebildete, radial vorstehende Vorsprünge besitzen, deren Öffnungsrandbereiche korrespondierend zu den Vorsprüngen der Einsatzdichtungsringe die Vorsprünge aufnehmende, eingeprägte Vertiefungen aufweisen, und deren Einsatzdichtungsringe nach dem Einsetzen in die Durchgangsöffnungen durch Verstemmen der Vertiefungen befestigt sind.

Durch die Erfindung ist eine Flachdichtung geschaffen, deren Einsatzdichtungsringe mit einer einfachen und wirtschaftlichen Methode mit der Flachdichtung handhabungssicher und betriebssicher befestigt sind. Durch das Verstemmen der Vertiefungen sind die Einsatzdichtungsringe über ihre Vorsprünge vor dem Herausfallen aus der Flachdichtung gesichert, und gleichzeitig können sich die Einsatzdichtungsringe nicht verschieben.

Bevorzugt ist die Tiefe der Einprägungen etwa gleich eineinhalb- bis zweimal so groß wie die Dicke der Vorsprünge, so daß die Vorsprünge von den Vertiefungen vollständig aufgenommen und zum anderen die Ränder der Vertiefungen zur Befestigung verstemmt werden können. Die Tiefe der Einprägung kann sich dabei bis auf zwei Drittel der Flachdichtungsdicke erstrecken, ohne die Funktion der Flachdichtung zu beeinträchtigen.

Bevorzugt werden zur Vereinfachung des Einprägens der Vertiefungen zunächst beim Stanzen der Durchgangsöffnungen in die Flachdichtung gleichzeitig Öffnungen ausgestanzt, die jedoch kleiner als die späteren Vertiefungen sind. Anschließend müssen dann nur noch die Randzonen dieser Öffnungen entsprechend der Vorsprungskontur geprägt werden, und es genügt, wenn bei der einbaufähigen Dichtung die Vorsprünge auf diesen geprägten Randzonen aufliegen.

Im Prinzip genügt es, wenn nur ein Vorsprung am Außenumfang des Einsatzdichtungsringes vom Verstärkungsring gebildet ist, bevorzugt sind aber mehrere Vorsprünge am Außenumfang des Einsatzdichtungsringes gleichmäßig verteilt angeordnet. Die Anzahl der Vorsprünge richtet sich dabei nach der Größe der Einsatzdichtungsringe. Die Einsatzdichtungsringe werden in erster Linie als Weichstoffringe aus Elastomer- oder Faservliesmaterial mit eingelagerten und/oder einvulkanisierten metallischen Verstärkungsringen ausgeführt und dienen zur Abdichtung von vor allem Flüssigkeitsöffnungen von Zylinderkopfdichtungen. Gleichermaßen sind Einsatzdichtungsringe einsatzfähig, deren Verstärkungsringe Trägerringe mit beidseitig aufliegenden Weichstoffringen vor allem aus Elastomer- oder Faservliesmaterial sind.

Im Sinne der Erfindung können die Einsatzdichtungsringe auch aus von einem Blechmantel umhüllten Federringen bestehen. Der umhüllende Blechmantelring bildet dann mit einem Schenkel die radial vorstehenden Vorsprünge. Da diese Einsatzdichtungsringe bevorzugt vollständig aus Metall bestehen, können sie vor allem an den thermisch beanspruchten Brennraumrändern der Dichtung eingesetzt werden.

Im Sinne der Erfindung können die Einsatzdichtungsringe ferner auch an anderen Dichtungsöffnungen eingesetzt werden, oder der als Trägerring ausgebildete metallische Verstärkungsring kann mehrere Öffnungen gleichzeitig bilden, wobei auf dem Trägerring, beidseitig die verschiedenen Öffnungen umgebend, die Weichstoffringe angeordnet sind.

Durch die Erfindung ist somit eine Flachdichtung geschaffen, deren Einsatzdichtungsringe einfach und dadurch wirtschaftlich sowie handhabungssicher und betriebssicher befestigt sind. Die Einsatzdichtungsringe können nach den verschiedenen Verfahren durch Auftragen und Ausvulkanisieren der Weichstoffmassen auf dem vorher ausgestanzten Verstärkungsring separat hergestellt und dann an der Dichtungsplatte in die Durchgangsöffnung eingesetzt werden. Dadurch können auch relativ lange Dichtungen problemlos mit den Einsatzdichtungsringen ausgerüstet werden.

Die Erfindung wird durch die Abbildungen näher erläutert, die bevorzugte Ausführungsbeispiele der Erfindung in den verschiedenen Ansichten darstellen.

Es zeigen:

Figur 1 das Aufsichtsbild auf ein Teilstück der erfindungsgemäßen Zylinderkofdichtung

Figur 2 im Querschnitt die Befestigung des Einsatzdichtungsringes der Figur 1 in der Schnittlinie II - II

Figur 3 im Querschnitt die Befestigung des Einsatzdichtungsringes der Figur 1 in der Schnittlinie II - II in einer speziellen Ausführungsform der Vertiefung

Figur 4 die Aufsicht auf die Vertiefung der Figur 3 vor Einsatz des Einsatzdichtungsringes.

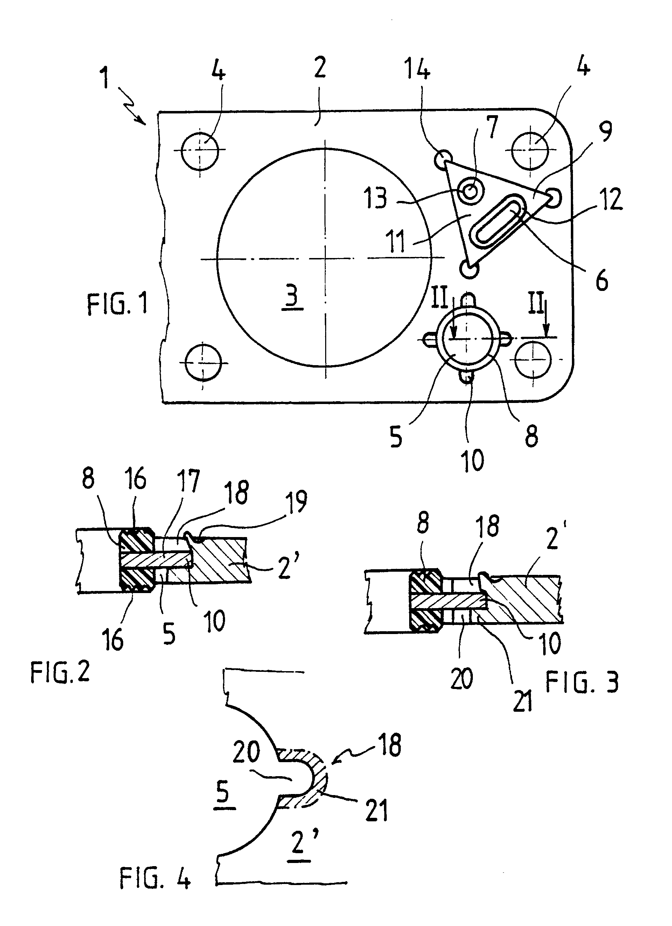

Im Aufsichtsbild der Figur 1 ist (1) die Zylinderkopfdichtung aus einer Stahlplatte (2) mit den Durchgangsöffnungen für den Brennraum (3) und die Befestigungsschrauben (4). In die Flüssigkeitsöffnungen für das Kühlmittel (5) und das Schmieröl (6, 7) sind Einsatzdichtungsringe (8, 9) eingesetzt. Der Einsatzdichtungsring (8) ist in Aufsicht kreisrund und besteht aus einem Elastomer mit einvulkanisiertem Verstärkungsring. Der Verstärkungsring bildet am Außenumfang vier über den Umfang gleichmäßig verteilte Vorsprünge (10), die in korrespondierende eingeprägte Vertiefungen der Dichtungsplatte (2) am Öffnungsrand (5) eingesetzt sind. Der Einsatzdichtungsring (9) besteht aus eienr Trägerplatte (11) mit den Öffnungen (6, 7) für das Schmieröl. Die Öffnungen sind von beidseitig auf die Trägerplatte (11) aufgetragenen Elastomerringen (12, 13) umgeben. Die Trägerplatte (11) besitzt eine etwa dreieckige Kontur und am Außenumfang drei von den Ecken ausgehende Vorsprünge (14), die in korrespondierende eingeprägte Vertiefungen der Dichtungsplatte (2) eingesetzt sind.

Das Querschnittsbild der Figur 2 zeigt einen Querschnitt durch den in die Öffnung (5) der Zylinderkopfdichtung (2) der Figur 1 eingesetzten Einsatzdichtungsring (8) in der Linie II - II. (8) ist der in die Öffnung (5) eingesetzte Einsatzdichtungsring der Figur 1 aus einem Elastomer mit den profilierten Stirnflächen (16) und dem einvulkanisierten metallischen Verstärkungsring (17). Der metallische Verstärkungsring (17) hat am Außenumfang den radial vorstehenden Vorsprung (10) gebildet, der in die eingeprägte Vertiefung (18) der Zylinderkopfdichtugnsplatte eingesetzt ist. Die Dicke des Verstärkungsringes (17) ist etwa 1/3 so groß wie die Dicke der Zylinderkopfdichtung (1), und die Vertiefung (18) ist durch Prägen der Zylinderkopfdichtungsplatte (2) auf 2/3 der ursprünglichen Dicke hergestellt. Der Rand (19) der Vertiefung (18) ist nach Einsetzen des Einsatzdichtungsringes (8) verstemmt, so daß der Vorsprung (10) und damit der Einsatzdichtungsring (8) vor dem Herausfallen gesichert sind.

Im Querschnittsbild der Figur 3 ist zunächst im Bereich der späteren Vertiefung (18') eine Öffnung (20) in die Flachdichtungsplatte (2') gestanzt, die jedoch eine kleinere Fläche als die spätere Vertiefung (18') besitzt. Anschließend ist die Randzone (21) der Öffnung (20) auf die Kontur der Vertiefung (18') geprägt, so daß der Vorsprung (10) des Einsatzdichtungsringes (8) nur noch auf dieser Randzone (21) aufliegt.

Figur 4 zeigt die Vertiefung (18') der Dichtungsplatte (2') der Figur 3 in Aufsicht, jedoch ohne Einsatzdichtungsring. Dabei ist zunächst die Öffnung (20) im Bereich der späteren Vertiefung ausgestanzt, die jedoch kleiner als die spätere Vertiefung ist. Anschließend ist die Randzone (21) der Öffnung (20) auf die Größe der Vertiefung (18') geprägt.

**Patentansprüche**

1. Flachdichtung aus einer Metallblechplatte, insbesondere Zylinderkopfdichtung für Verbrennungskraftmaschinen, mit in mindestens eine der Durchgangsöffnungen eingesetzten Einsatzdichtungsringen aus metallisch verstärktem Weichstoffmaterial und am Außenumfang radial vorstehenden Vorsprüngen, dadurch gekennzeichnet, daß die Vorsprünge (10, 14) von den metallischen Verstärkungsringen (17) gebildet sind, daß in den Öffnungsrandbereich (5, 6, 7) der Metallblechplatte (2) korrespondierend zu den Vorsprüngen (10, 14) der Einsatzdichtungsringe (9, 11) die Vorsprünge (10, 14) aufnehmende Vertiefungen (18) eingeprägt sind, und daß die Einsatzdichtungsringe (9, 10) nach dem Einsetzen in die Durchgangsöffnungen (5, 6, 7) durch Verstemmen der Vertiefungsränder (19) gegen Herausfallen gesichert sind.

2. Flachdichtung nach Anspruch 1, dadurch gekennzeichnet, daß die Tiefe der eingeprägten Vertiefungen (18) etwa eineinhalb- bis zweimal so groß ist wie die Dicke der Vorsprünge (10, 14).

3. Flachdichtung nach den Ansprüchen 1 und 2, dadurch gekennzeichnet, daß die Tiefe der eingeprägten Vertiefungen (18) sich auf bis zu maximal zwei Drittel der Dichtungsdicke (2) erstreckt.

4. Flachdichtung nach den Ansprüchen 1 bis 3, dadurch gekennzeichnet, daß die Verstärkungsringe als Trägerringe (11) ausgebildet sind, auf die beidseitig die Öffnungen (6, 7) umgebende Weichstoffringe (12, 13) aufgetragen sind.

5. Flachdichtung nach mindestens einem der Ansprüche 1 bis 4, dadurch gekennzeichnet, daß die Vertiefungen (18) und die Vorsprünge (10, 14) eine halbkreisförmige, zueinander passende Kontur besitzen.

6. Flachdichtung nach mindestens einem der Ansprüche 1 bis 5, dadurch gekennzeichnet, daß die Vertiefungsränder (19), über den Umfang gleichmäßig verteilt, punktförmig verstemmt sind.

7. Flachdichtung nach mindestens einem der Ansprüche 1 bis 6, dadurch gekennzeichnet, daß die Vertiefung (18') durch Ausstanzen einer kleineren Fläche (20) als die Vertiefung und anschließend durch Prägen der Randzone (21) entsprechend der Größe der Vertiefung (18') gebildet ist.

8. Flachdichtung nach den Ansprüchen 1 bis 3, dadurch gekennzeichnet, daß der Einsatzdichtungsring (9, 11) aus einem von einem Blechmantel umhüllten Schraubenfederring besteht, dessen radial am Außenumfang vorstehende Vorsprünge aus einem Schenkel des Blechmantelringes gebildet sind.

FIG. 1

FIG. 2

FIG. 3

FIG. 4

## EUROPÄISCHER RECHERCHENBERICHT

Nummer der Anmeldung

**EP 91 10 4482**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 720 838 (ELRING DICHTUNGWERKE) <br> * das ganze Dokument * <br> − − − | 1,4 | F 16 J 15/12 <br> F 02 F 11/00 |
| A | AUTOMOTIVE ENGINEERING. vol. 88, no. 8, 31 August 1980, WARRENDALE US Seiten 91 - 97; CZERNIK: "a primer on cylinder head gaskets" <br> * Seite 97, Spalte 1, Zeilen 23 - 33; Figur 19 * <br> − − − | 1,6 | |
| A | DE-A-2 923 486 (GOETZE A.G.) <br> * Anspruch 1; Figuren * <br> − − − − − | 1,5 | |

|  | RECHERCHIERTE SACHGEBIETE (Int. Cl.5) |
|---|---|
|  | F 16 J <br> F 02 F |

Der vorliegende Recherchenbericht wurde für alle Patentansprüche erstellt

| Recherchenort | Abschlußdatum der Recherche | Prüfer |
|---|---|---|
| Den Haag | 11 Juni 91 | NARMINIO A. |